# EUROPÄISCHE PATENTSCHRIFT

(11) **EP 2 975 923 B1**
(45) Veröffentlichungstag und Bekanntmachung des Hinweises auf die Patenterteilung: **19.04.2017**
(21) Anmeldenummer: 14708795.1
(22) Anmeldetag: 11.02.2014
(51) Int. Cl.: A01D 41/127, G01N 33/02

(54) **WIEGEVORRICHTUNG FÜR EINEN PARZELLENMÄHDRESCHER**
WEIGHING DEVICE FOR A PLOT COMBINE HARVESTER
DISPOSITIF DE PESAGE DESTINÉ À UNE MOISSONNEUSE-BATTEUSE POUR PARCELLES

(30) Priorität: 18.03.2013 AT 501872013
(43) Veröffentlichungstag der Anmeldung: 27.01.2016
(73) Patentinhaber: Wintersteiger AG, 4910 Ried im Innkreis (AT)
(72) Erfinder: DIERNEDER, Stefan, A-4331 Naarn (AT); MAIER, Florian, A-4060 Leonding (AT); GADERMEIR, Daniel, A-4910 Pattigham (AT)
(74) Vertreter: Patentanwaltskanzlei Hübscher
(86) Internationale Anmeldenummer: PCT/AT2014/050039
(87) Internationale Veröffentlichungsnummer: WO 2014/146154

(56) Entgegenhaltungen:
- US-A- 4 403 191
- US-A- 5 173 079
- US-A- 5 487 702

## Beschreibung

### Technisches Gebiet

Die Erfindung bezieht sich auf eine Wiegevorrichtung für einen Parzellenmähdrescher mit einem auf einem Gestell nach Art eines Gelenkparallelogramms in vertikaler Richtung verlagerbar geführten Wiegebehälter, der gegenüber einem Gestell über eine Wiegezellenanordnung mit einer in vertikaler Richtung zwischen dem Gestell und dem Wiegebehälter angelenkten Wiegezelle abgestützt ist. Eine derartige Wiegevorrichtung ist z.B. aus US 5 173 079 A bekannt.

### Stand der Technik

Um die Nachteile von Wiegevorrichtungen zum Erfassen des Erntegewichts mit Wiegebehältern zu vermeiden, die zur Anpassung an Hanglagen frei pendelnd auf den Parzellenmähdreschern aufgehängt sind, wurde bereits vorgeschlagen (US 5 487 702 A, US 6 313 414 B1), den Wiegebehälter über eine Wiegezellenanordnung auf einem Gestell abzustützen, das starr mit dem Parzellenmähdrescher verbunden ist. Um Schwingungs- und Neigungseinflüsse auf das Wiegeergebnis berücksichtigen zu können, wird ein Referenzgewicht mit einer zusätzlichen Wiegezelle eingesetzt, sodass der Unterschied zwischen der bekannten Größe des Referenzgewichts und der mit Hilfe der Wiegezelle erfassten Messgröße als Korrekturmaß für das über die Wiegezellenanordnung erfasste Gewicht des im Wiegebehälter befindlichen Ernteguts herangezogen werden kann. Nachteilig bei diesen bekannten Wiegevorrichtungen ist zunächst der durch das zusätzliche Referenzgewicht und die hierfür vorgesehene Wiegezelle bedingte Mehraufwand. Außerdem ist zu befürchten, dass sich die Messfehler der einzelnen Wiegezellen der Wiegezellenanordnung addieren. Ein weiterer Nachteil ist darin zu sehen, dass aufgrund der Abstützung des Wiegebehälters über mehrere Wiegezellen der Wiegezellenanordnung die Gefahr besteht, dass sich die Wiegezellen gegeneinander verspannen, was zu Messfehlern führt. Werden zur Vermeidung von solchen gegenseitigen Verspannungen der Wiegezellen elastisch nachgiebige Elemente eingesetzt, so vergrößert sich die Schwingungsneigung des Wiegebehälters, was ja vermieden werden soll.

Zur Vermeidung dieser Nachteile ist es bereits bekannt, einen nach Art eines Gelenkparallelogramms gegenüber einem Gestell abgestützten Wiegebehälter mit einer Wiegezellenanordnung vorzusehen, die einen in vertikaler Richtung belastete Wiegezelle umfasst, sodass zur Gewichtserfassung eine einzige Wiegezelle ausreicht. Mit der Beschränkung auf eine einzige Wiegezelle werden alle Schwierigkeiten vermieden, die mit Wiegeanordnungen aus mehreren Wiegezellen zu berücksichtigen wären. Gelenkparallelogramme mit drehbar gelagerten Lenkern bedürfen allerdings einer Wartung, um gleichbleibende Reibungsverhältnisse in den Gelenken auch über längere Zeiträume sicherzustellen.

### Darstellung der Erfindung

Der Erfindung liegt somit die Aufgabe zugrunde, eine Wiegevorrichtung für einen Parzellenmähdrescher so auszubilden, dass bei einem möglichst geringen Platzbedarf vorteilhafte Voraussetzungen für eine genaue Erfassung des Erntegewichts geschaffen werden können, und zwar weitgehend unabhängig von Konstruktionstoleranzen und Wartungsarbeiten.

Ausgehend von einer Wiegevorrichtung der eingangs geschilderten Art löst die Erfindung die gestellte Aufgabe dadurch, dass der Wiegebehälter über beidseitig eingespannte Blattfedern nach Art eines Gelenkparallelogramms auf dem Gestell gelagert ist.

Aufgrund des Einsatzes von Blattfedern, die nach Art eines Gelenkparallelogramms beidseitig eingespannt werden, kann auf den Einsatz von Lenkern verzichtet werden, sodass alle Nachteile vermieden werden, die sich in Verbindung mit den Drehgelenken von Gelenkparallelogrammen ergeben. Die Blattfedern bieten außerdem eine spielfreie Seitenführung für den Wiegebehälter. Der für die Belastung der Wiegezelle benötigte Federweg ist im Wesentlichen vernachlässigbar, sodass die Einflüsse der sich ändernden Federkräfte aufgrund der Verlagerung des Wiegebehälters keinen Einfluss auf das Messergebnis haben.

Um Hangneigungen und Schwingungen berücksichtigen zu können, können zusätzlich in an sich bekannter Weise Beschleunigungsgeber und Neigungssensoren eingesetzt werden.

Die in vertikaler Richtung zwischen dem Gestell und dem Wiegebehälter angelenkte Wiegezelle kann über den Wiegebehälter je nach der Anlenkung auf Druck oder auf Zug beansprucht werden. Besonders einfache Konstruktionsverhältnisse ergeben sich allerdings, wenn die Wiegezelle auf Zug belastet wird, weil die Wiegezelle bei einer Zugbelastung einfacher mit dem Gestell und dem Behälter momentfrei verbunden werden kann. Zu diesem Zweck braucht ja die Wiegezelle lediglich allseitig schwenkbar zwischen dem Gestell und dem Behälter angelenkt zu werden. Eine Anlenkung über ein Kreuzgelenk bzw. ein Kugelgelenk erfüllt diese Anforderungen in einfacher Weise.

Um vorteilhafte Konstruktionsbedingungen zu schaffen, kann ein den Wiegebehälter aufnehmender Hilfsrahmen nach Art eines Gelenkparallelogramms am Gestell gelagert werden, wobei die Wiegezelle am Hilfsrahmen angreift. Durch diese Maßnahme kann der Wiegebehälter unabhängig von den Lager- und Führungsbedingungen vergleichsweise leicht gebaut werden, weil die Lager-und Führungskräfte vom Hilfsrahmen aufgenommen werden.

### Kurze Beschreibung der Zeichnung

In der Zeichnung ist der Erfindungsgegenstand beispielsweise dargestellt. Es zeigen
- Fig. 1: eine erfindungsgemäße Wiegevorrichtung für einen Parzellenmähdrescher in einer vereinfachten, zum Teil aufgerissenen Seitenansicht und

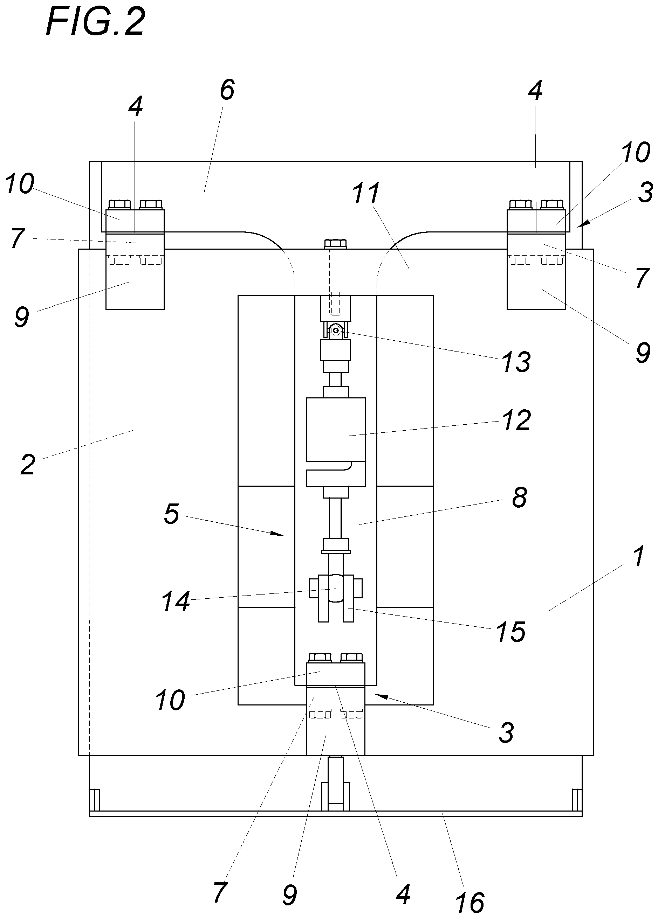

- Fig. 2: diese Wiegevorrichtung in einer Rückansicht von der Gestellseite her.

### Weg zur Ausführung der Erfindung

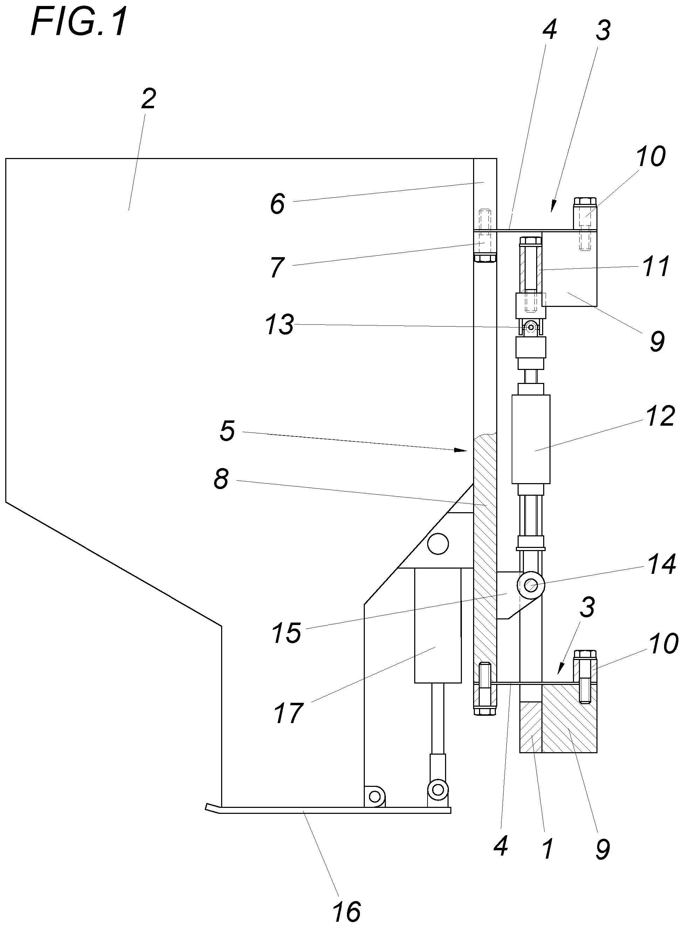

Die dargestellte Wiegevorrichtung umfasst ein starr auf einem Parzellenmähdrescher montierbares Gestell 1 in Form eines vertikalen Rahmens und einen Wiegebehälter 2, der nach Art eines Gelenkparallelogramms 3 in vertikaler Richtung auf dem Gestell 1 verlagerbar geführt ist. Dieses Gelenkparallelogramm 3 wird durch Blattfedern 4 gebildet, die beidseitig eingespannt sind und das Gestell 1 mit einem Hilfsrahmen 5 verbinden, der den Wiegebehälter 2 aufnimmt. Der Hilfsrahmen 5 ist in Form eines T-förmigen Trägers ausgebildet, wobei zwei Blattfedern 4 an den Enden des Querschenkels 6 mit Hilfe von Klemmklötzen 7 und eine mittlere Blattfeder 4 an der Stirnseite des Stegs 8 des T-förmigen Hilfsrahmens 5 ebenfalls mittels eines Klemmklotzes 7 eingespannt sind. Die Einspannung dieser Blattfedern 4 im Bereich des Gestells 1 erfolgt in ähnlicher Weise über mit dem Gestell 1 verbundene Stützkörper 9, an die die Blattfedern 4 über Klemmklötze 10 angedrückt gehalten werden. Am oberen Schenkel 11 des rahmenförmigen Gestells 1 ist eine Wiegezelle 12 über ein Kreuzgelenk 13 aufgehängt. Auf der gegenüberliegenden Seite greift die Wiegezelle 11 über ein Kugelgelenk 14 an einem Stützansatz 15 des Hilfsrahmens 5 an, wie dies insbesondere der Fig. 1 entnommen werden kann. Der Hilfsrahmen 5, der über die beidseitig eingespannten Blattfedern 4 nach Art eines Gelenkparallelogramms 3 gegenüber dem Gestell 1 in vertikaler Richtung verlagerbar geführt wird, ist somit über die Wiegezelle 12 am Gestell 1 aufgehängt, dass lediglich vertikale Kräfte von der Wiegezelle 12 aufgenommen werden können und Querkräfte keinen Einfluss auf das Messergebnis haben.

Das zu wiegende Erntegut wird chargenweise in den Wiegebehälter 2 eingefüllt und mit Hilfe der Wiegezelle 12 gewogen. Über einen Klappboden 16, der durch einen Schwenkzylinder 17 betätigt werden kann, kann das gewogene Erntegut in einem Sammelbehälter ausgetragen werden.

## Patentansprüche

1. Wiegevorrichtung für einen Parzellenmähdrescher mit einem auf einem Gestell (1) nach Art eines Gelenkparallelogramms (3) in vertikaler Richtung verlagerbar geführten Wiegebehälter (2), der gegenüber dem Gestell (1) über eine Wiegezellenanordnung mit einer in vertikaler Richtung zwischen dem Gestell (1) und dem Wiegebehälter (2) angelenkten Wiegezelle (12) abgestützt ist, **dadurch gekennzeichnet, dass** der Wiegebehälter (2) über beidseitig eingespannte Blattfedern (4) nach Art eines Gelenkparallelogramms (3) auf dem Gestell (1) gelagert ist.

2. Wiegevorrichtung nach Anspruch 1, **dadurch gekennzeichnet, dass** die Wiegezelle (12) allseitig schwenkbar zwischen dem Gestell (1) und dem Wiegebehälter (2) angelenkt ist.

## Claims

1. Weighing device for a plot combine harvester having a weighing container (2) which is displaceably guided in a vertical direction on a frame (1) in the manner of a parallelogram linkage (3) and which is supported relative to the frame (1) by means of a weighing cell arrangement having a weighing cell (12) articulated in a vertical direction between the frame (1) and the weighing container (2), **characterised in that** the weighing container (2) is mounted on the frame (1) in the manner of a parallelogram linkage (3) by means of leaf springs (4) clamped in on both sides.

2. Weighing device as claimed in claim 1, **characterised in that** the weighing cell (12) is articulated to be pivotable on all sides between the frame (1) and the weighing container (2).

## Revendications

1. Dispositif de pesage destiné à une moissonneuse-batteuse pour parcelles, avec un récipient de pesage (2) guidé de manière à pouvoir être déplacé dans la direction verticale sur un châssis (1) à la manière d'un parallélogramme articulé (3), qui s'appuie, par rapport au châssis (1), sur un ensemble de cellules de pesage avec une cellule de pesage (12) articulée dans la direction verticale entre le châssis (1) et le récipient de pesage (2), **caractérisé en ce que** le récipient de pesage (2) est monté sur le châssis (1) par l'intermédiaire de ressorts à lames (4) tendus de part et d'autre à la manière d'un parallélogramme articulé (3).

2. Dispositif de pesage selon la revendication 1, **caractérisé en ce que** la cellule de pesage (12) est articulée de tout côté de manière pivotante entre le châssis (1) et le récipient de pesage (2).
